# EUROPEAN PATENT APPLICATION

(11) **EP 4 231 422 A1**
(43) Date of publication of application: **23.08.2023**
(21) Application number: 22791971.9
(22) Date of filing: 18.04.2022
(51) Int. Cl.: H01M 50/24, H01M 50/211, H01M 50/262, H01M 50/30, H01M 10/653, H01M 10/647, H01M 10/6554, H01M 10/6566, H01M 10/617

(54) **BATTERY MODULE AND BATTERY PACK INCLUDING SAME**

(30) Priority: 23.04.2021 KR 20210053226; 23.04.2021 KR 20210053227; 14.03.2022 KR 20220031525
(71) Applicant: LG Energy Solution, Ltd., Seoul 07335 (KR)
(72) Inventor: JANG, Sunghwan, Daejeon 34122 (KR); SEONG, Junyeob, Daejeon 34122 (KR); PARK, Won Kyoung, Daejeon 34122 (KR)
(74) Representative: Goddar, Heinz J.
(86) International application number: PCT/KR2022/005524
(87) International publication number: WO 2022/225271

(57) **Abstract**

A battery module according to one embodiment of the present disclosure includes at least one battery cell, and a module unit containing a unit module frame surrounding the at least one battery cell, wherein a side surface part of the unit module frame includes a recessed part.

## Description

### CROSS-REFERENCE TO RELATED APPLICATION(S)

This application claims benefit of priority to Korean Patent Application No. 10-2021-0053226 filed in the Korean Intellectual Property Office on April 23, 2021, Korean Patent Application No. 10-2021-0053227 filed in the Korean Intellectual Property Office on April 23, 2021, and Korean Patent Application No. 10-2022-0031525 filed in the Korean Intellectual Property Office on March 14, 2022, the disclosure of which is incorporated herein by reference in its entirety.

The present disclosure relates to a battery module and a battery pack including the same, and more particularly, to a battery module which is improved in expandability, structural rigidity, cooling performance and safety, and a battery pack including the same.

### [BACKGROUND]

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, there is a growing need for development of the secondary battery.

Currently commercialized secondary batteries include a nickel cadmium battery, a nickel hydrogen battery, a nickel zinc battery, a lithium secondary battery, and the like. Among them, the lithium secondary battery has come into the spotlight because they have advantages over nickel-based secondary batteries, for example, hardly exhibiting memory effects and thus being freely charged and discharged, and having very low self-discharge rate and high energy density.

Such a lithium secondary battery mainly uses a lithium-based oxide and a carbonaceous material as a cathode active material and an anode active material, respectively. The lithium secondary battery includes an electrode assembly in which a cathode plate and an anode plate each coated with a cathode active material and an anode active material are disposed with a separator being interposed between them, and a battery case that seals and houses the electrode assembly together with an electrolyte solution.

Generally, the lithium secondary battery may be classified based on the shape of the exterior material into a can type secondary battery in which the electrode assembly is mounted in a metal can, and a pouch type secondary battery in which the electrode assembly is mounted in a pouch made of an aluminum laminate sheet.

In the case of a secondary battery used for small-sized devices, two to three battery cells are disposed, but in the case of a secondary battery used for a middle or large-sized device such as an automobile, a battery module in which a large number of battery cells are electrically connected is used. In such a battery module, a large number of battery cells are connected to each other in series or in parallel to form a battery cell stack, thereby improving capacity and output. In addition, one or more battery modules may be mounted together with various control and protection systems such as BMS (battery management system) and a cooling system to form a battery pack.

When the temperature of the secondary battery rises higher than an appropriate temperature, the performance of the secondary battery may be deteriorated, and in the worst case, there is also a risk of an explosion or ignition. In particular, a large number of secondary batteries, that is, a battery module or a battery pack having battery cells, can add up the heat generated from the large number of battery cells in a narrow space, so that the temperature can rise more quickly and excessively. In other words, in the case of a battery module in which a large number of battery cells are stacked, and a battery pack equipped with such a battery module, it is possible to obtain high output, but it is not easy to remove heat generated from the battery cells during charging and discharging. When the heat dissipation of the battery cell is not properly performed, deterioration of the battery cells is accelerated, the lifespan is shortened, and the possibility of explosion or ignition increases.

Moreover, in the case of a battery module included in a vehicle battery pack, it is frequently exposed to direct sunlight and can be placed in a high-temperature condition such as summer or desert areas.

Therefore, when a battery module or a battery pack is configured, it is very important to stably and effectively ensure the cooling performance.

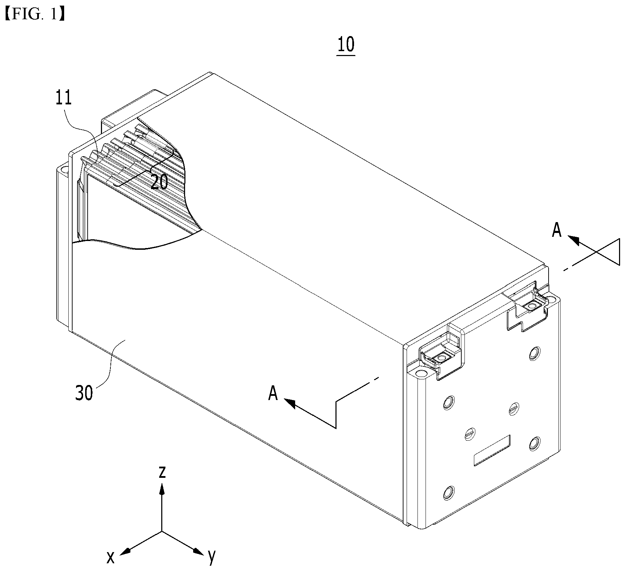

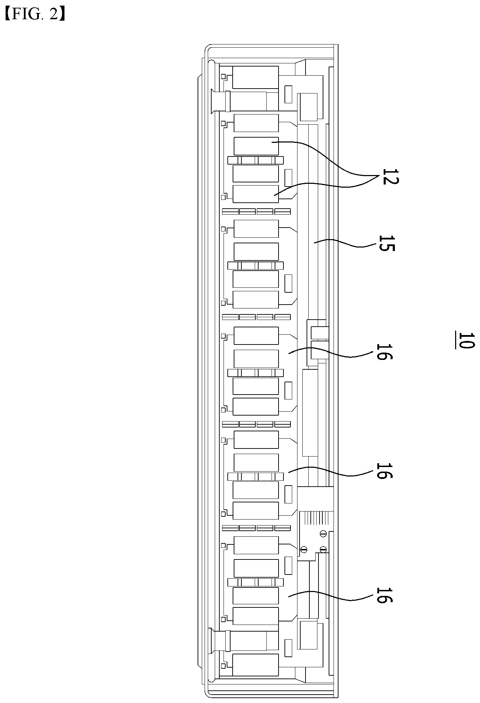

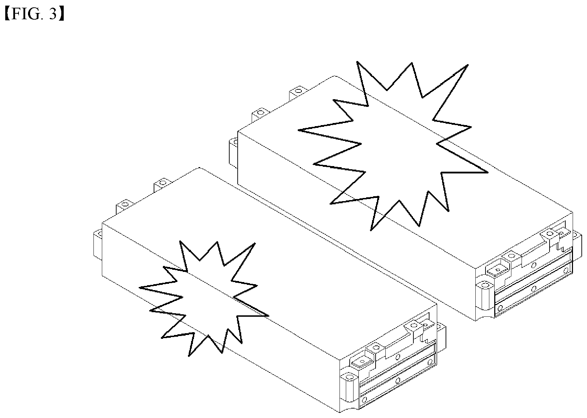

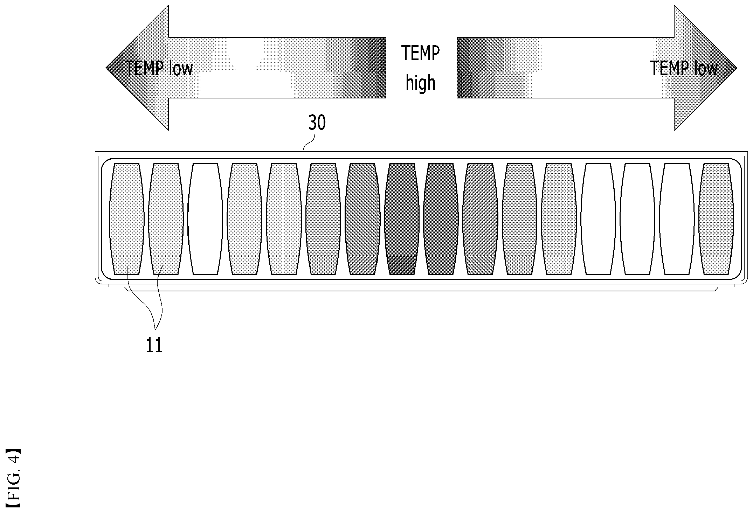

Fig. 1 is a perspective view showing a conventional battery module, and Fig. 2 is a cross-sectional view showing a cross-section taken along the cutting line A-A' of Fig. 1. Fig. 3 is a perspective view showing a plurality of conventional battery modules. Fig. 4 is a view showing a temperature distribution of a conventional battery module.

Referring to Figs. 1 to 4, the conventional battery module 10 is configured such that a plurality of battery cells 11 are stacked to form a battery cell stack 20, and the battery cell stack 20 is housed in a module frame 30. Also, the battery module includes a busbar assembly that electrically connects the electrode leads 12 of the battery cells 11. At this time, the busbar assembly includes a busbar frame 15 having a lead slot through which the electrode leads 12 of each battery cell 11 pass individually, and a busbar slot mounted on the busbar frame 15 and formed so as to correspond to the number of lead slots, and also includes a busbar 16 connected to an electrode lead 12 that has passed through a busbar slot by welding or the like.

In the case of a conventional battery module, the structure of the finished product of battery module was complicated due to the inclusion of a large number of configurations as described above. Further, the conventional battery module does not have a structure capable of discharging flame and gas when a flame inside the battery module generates. Therefore, when a plurality of battery modules are adjacent as shown in Fig. 3, a flame generated in one battery module may propagate to an adjacent battery module. In particular, when a thermal runaway propagation phenomenon occurs, it was very vulnerable to a chain reaction between conventional battery modules. Further, the conventional battery module is formed of a single module frame, which makes it difficult to secure the cell swelling suppression effect and structural rigidity.

Furthermore, referring to Fig. 4, the conventional battery module 10 appears severely in the temperature deviation between the outermost battery cell 11 and the central battery cell 11 where heat exchange with the external air occurs. In particular, in the central battery cell 11, the temperature of the battery cells 11 coming into close contact with each other is transmitted, and the high temperature state is maintained, which may increase the possibility of explosion or ignition.

Therefore, in order to solve the above problems, there is a need for a new battery module structure that holds a cooling structure capable of discharging gases and flames generated during thermal runaway propagation and preventing a chain reaction while resolving the structural complexity of the module, and improving the expandability and module rigidity and eliminating the temperature deviation between battery cells.

### [DETAILED DESCRIPTION OF THE INVENTION]

### [Technical Problem]

It is an object of the present disclosure to provide a battery module which is improved in expandability, structural rigidity, cooling performance and safety, and a battery pack including the same.

However, the objects of the present disclosure are not limited to the aforementioned objects, and other objects which are not described herein should be clearly understood by those skilled in the art from the following detailed description and the accompanying drawings.

### [Technical Solution]

According to one embodiment of the present disclosure, there is provided a battery module comprising: at least one battery cell, and a module unit containing a unit module frame surrounding the at least one battery cell, wherein a side surface part of the unit module frame includes a recessed part.

The battery module according to another embodiment may further include a gas discharge port formed on the recessed part.

The gas discharge port may include being formed in a partial region of the recessed part.

The battery module further includes an electrode lead formed in the battery cell, wherein the gas discharge port may include being formed on the recessed part so as to be adjacent to the electrode lead.

The recessed part may include being recessed inside the unit module frame toward a direction in which the battery cell is located.

The battery module may include being formed so that a surface of the unit module frame on which the recessed part is formed and a side surface part of the battery cell are parallel to each other.

The module unit is stacked by a plurality of numbers, and the recessed portion may form a space part between the module units as the plurality of module units are stacked.

The gas discharge port may be coupled to the space part.

The unit module frame includes a protrusion that protrudes as compared to the recessed part, and includes stacking the module units so that the protrusions of the plurality of module units come into contact with each other.

The plurality of stacked module units may be coupled by a coupling member.

The coupling member includes a strap, and the strap may include surrounding the plurality of stacked module units.

The battery module according to another embodiment of the present disclosure further includes a reinforcing bead formed on the recessed part, wherein the reinforcing beads may be spaced apart on the recessed part, and may be formed by a plurality of beads.

The battery module according to another embodiment of the present disclosure may further include a heat dissipation member formed on the space part.

The battery module may further include a thermal conductive resin layer formed under the bottom of the unit module frame.

According to yet another embodiment of the present disclosure, there is provided a battery pack comprising the above-mentioned battery module.

The battery pack further includes a protrusion formed in the unit module frame of the battery module, and further includes a fixing member fitted on the protrusion, wherein the battery module may be fixed by the fixing member.

### [Advantageous Effects]

According to embodiments of the present disclosure, the battery module is formed by stacking module units including the unit module frame, thereby achieving the effect of improving expandability and structural rigidity.

Further, the battery module includes a recessed part formed in the unit module frame, and a space part is formed on the recessed part, thereby capable of achieving the effect of eliminating the temperature difference between the battery cells and improving the cooling performance. In particular, the space part forms a heat insulating layer, thereby capable of achieving an effect of preventing a chain reaction between adjacent module units and battery cells.

Further, the battery module includes a gas discharge port formed in the unit module frame, and flame and gas are discharged by the gas discharge port, whereby when a thermal runaway phenomenon occurs, the effect of suppressing propagation can be achieved.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is a perspective view showing a conventional battery module;
Fig. 2 is a cross-sectional view showing a cross-section taken along the cutting line A-A' of Fig. 1;
Fig. 3 is a perspective view showing a plurality of conventional battery modules;
Fig. 4 is a view showing a temperature distribution of a conventional battery module;
Fig. 5 is a perspective view showing a module unit included in a battery module according to an embodiment of the present disclosure;
Fig. 6 is a perspective view showing a battery module according to an embodiment of the present disclosure formed by connecting the module unit of Fig. 5;
Fig. 7 is a view showing a coupling member formed in the battery module of Fig. 6;
Fig. 8 is a cross-sectional view enlarging and showing the battery module of Fig. 6 as viewed from the y-axis direction of Fig. 5;
Fig. 9 is a perspective view showing a module unit included in a battery module according to another embodiment of the present disclosure;
Fig. 10 is a perspective view showing a battery module according to another embodiment of the present disclosure formed by connecting the module unit of Fig. 9;
Fig. 11 is a view showing a coupling member formed in the battery module of Fig. 10;
Fig. 12 is a perspective view enlarging and showing a section B of Fig. 10;
Fig. 13 is a cross-sectional view showing a cross-section taken along the cutting line C-C' of Fig. 12;
Fig. 14 is a perspective view showing a battery cell included in the battery module of the present disclosure;
Fig. 15 is a perspective view of a module unit included in a battery module according to another embodiment of the present disclosure;
Fig. 16 is a view showing a heat dissipation member and a thermal conductive resin layer included in a battery module according to another embodiment of the present disclosure; and
Fig. 17 is a view showing a battery pack according to another embodiment of the present disclosure.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

A description of parts not related to the description will be omitted herein for clarity, and like reference numerals designate like elements throughout the description.

Further, in the drawings, the size and thickness of each element are arbitrarily illustrated for convenience of explanation, and the present disclosure is not necessarily limited to those illustrated in the drawings. In the drawings, the thickness of layers, regions, etc. are exaggerated for clarity. In the drawings, for convenience of description, the thicknesses of some layers and regions are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means disposed on or below a reference portion, and does not necessarily mean being disposed "on" or "above" the reference portion toward the opposite direction of gravity.

Further, throughout the specification, when a portion is referred to as "including" a certain component, it means that the portion can further include other components, without excluding the other components, unless otherwise stated.

Further, throughout the specification, when referred to as "planar", it means when a target portion is viewed from the upper side, and when referred to as "cross-sectional", it means when a target portion is viewed from the side of a cross section cut vertically.

The terms "first," "second," etc. are used to explain various components, but the components should not be limited by the terms. These terms are only used to distinguish one component from the other component.

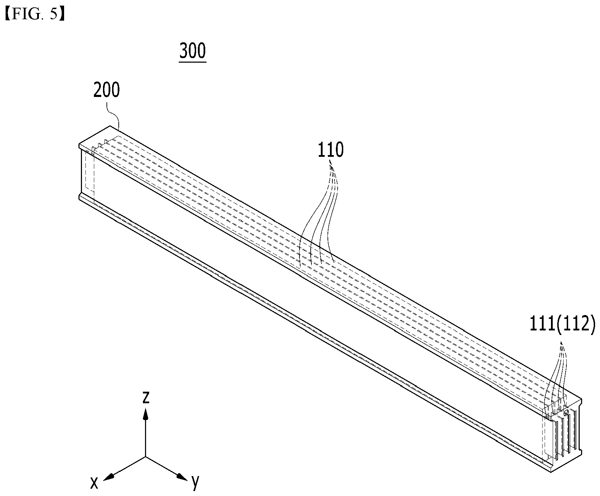

Hereinafter, a battery module according to an embodiment of the present disclosure will be described with reference to Figs. 5 to 8 and Fig. 14.

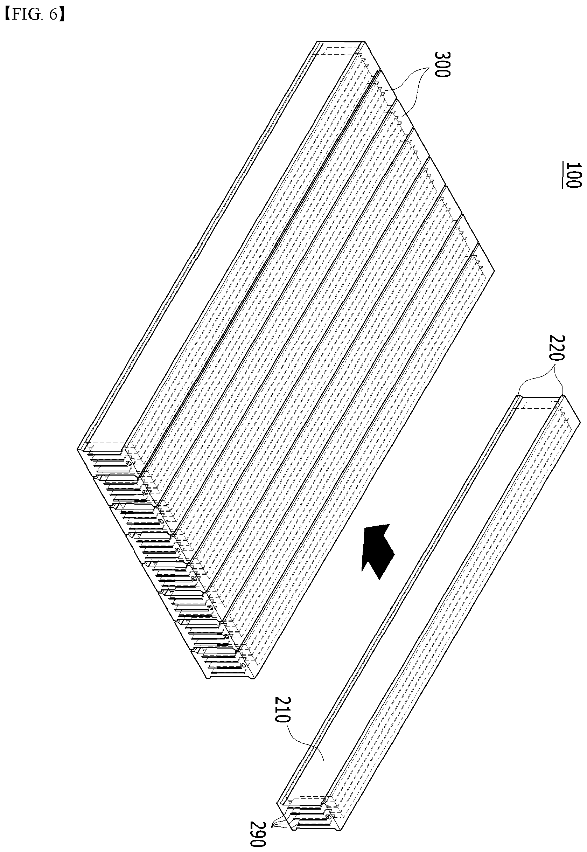

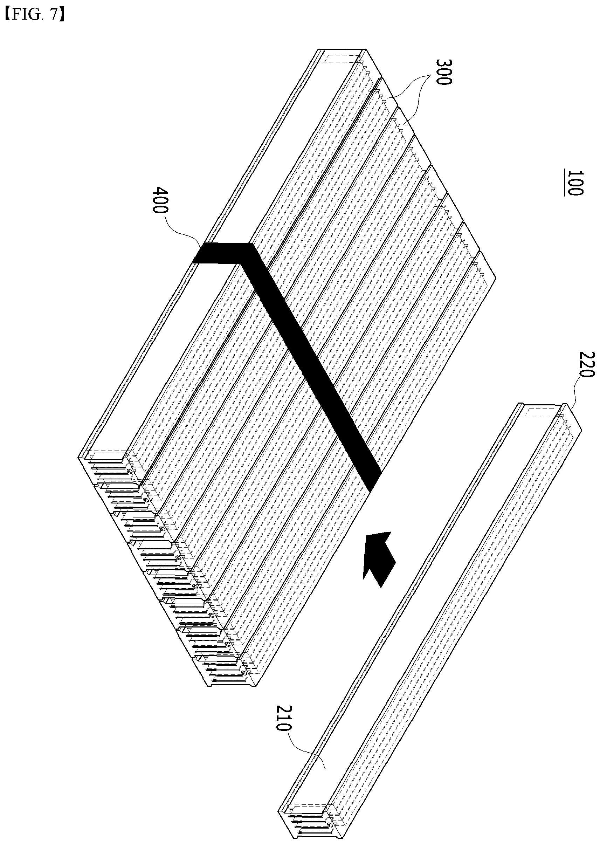

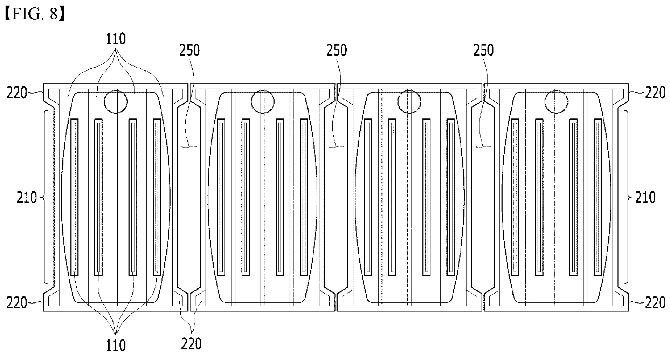

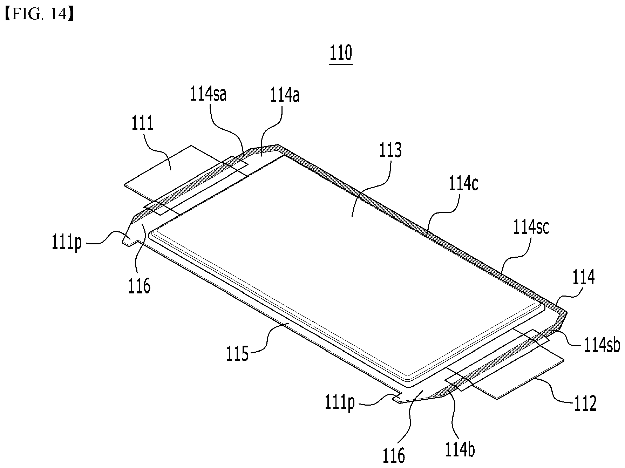

Fig. 5 is a perspective view showing a module unit included in a battery module according to an embodiment of the present disclosure. Fig. 6 is a perspective view showing a battery module according to an embodiment of the present disclosure formed by connecting the module unit of Fig. 5. Fig. 7 is a view showing a coupling member formed in the battery module of Fig. 6. Fig. 8 is a cross-sectional view enlarging and showing the battery module of Fig. 6 as viewed from the y-axis direction of Fig. 5. Fig. 14 is a perspective view showing a battery cell included in the battery module of the present disclosure.

Referring to Figs. 5 and 8, a battery module 100 according to the present embodiment includes at least one battery cell 110, and a module unit 300 containing a unit module frame 200 surrounding the at least one battery cell 110, wherein a side surface part of the unit module frame 200 includes a recessed part 210.

At this time, the battery cell 110 may be formed of at least one or more cells, and when a plurality of battery cells 110 are formed, they may be stacked in one direction to form a battery cell stack. Further, as shown in Fig. 5, the plurality of battery cells 110 may be stacked in the x-axis direction.

The battery cell 110 is preferably a pouch type battery cell. For example, referring to Fig. 14, the battery cell 110 according to the present embodiment has a structure in which the two electrode leads 111 and 112 face each other and protrude from one end 114a and the other end 114b of the battery cell 113, respectively. The battery cell 110 can be manufactured by joining both ends 114a and 114b of a cell case 114 and both side surfaces 114c connecting them in a state in which an electrode assembly (not shown) is housed in a cell case 114. In other words, the battery cells 110 according to the present embodiment have a total of three sealing parts 114sa, 114sb and 114sc, the sealing parts 114sa, 114sb and 114sc have a structure that is sealed by a method such as heat-sealing, and the remaining other one side part can be composed of a connection part 115. Between both end parts 114a and 114b of the battery case 114 can be defined as the longitudinal direction of the battery cell 110, and between one side part 114c connecting both end parts 114a and 114b of the battery case 114 and the connection part 115 can be defined as the width direction of the battery cell 110.

The connection part 115 is a region extending long along one edge of the battery cell 110, and a protrusion 110p of the battery cell 110 can be formed at an end of the connection part 115. The protrusion 110p may be formed on at least one of both ends of the connection part 115 and may protrude in a direction perpendicular to the extending direction of the connection part 115. The protrusion 110p may be located between one of the sealing parts 114sa and 114sb of both ends 114a and 114b of the battery case 114 and the connection part 115.

The battery case 114 generally has a laminate structure of a resin layer/a metal thin film layer/a resin layer. For example, when the surface of the battery case is formed of an O (oriented)-nylon layer, it tends to slide easily due to external impact when stacking a plurality of battery cells to form a medium or large-sized battery module. Therefore, in order to prevent this problem and maintain a stable stacked structure of battery cells, an adhesive member such as a cohesive-type adhesive such as a double-sided tape or a chemical adhesive bonded by chemical reaction during adhesion can be adhered to the surface of the battery case to form a battery cell stack.

The unit module frame 200 included in the battery module 100 according to an embodiment of the present disclosure may have a recessed part 210 formed in a side surface part. The battery cell 110 is located inside the unit module frame 200 and therefore, the recessed part 210 may include being recessed toward the direction in which the battery cell 110 is located. More specifically, referring to Fig. 8, the battery module may include being formed so that a surface of the unit module frame 200 on which the recessed part 210 is formed and a side surface part of the battery cell 110 are parallel to each other. At this time, the side surface part of the battery cell 110 may refer to a surface perpendicular to the stacking direction of the battery cells 110. Further, the recessed part 210 may be formed on the side surface part of the unit module frame 200 so as to correspond to and be parallel to the longitudinal direction of the battery cell 110.

Further, the side surface part of the unit module frame 200 may include a protrusion 220 that protrudes as compared to the recessed part 210. The protrusion 220 in contrast to the recessed part 210 may be formed on the unit module frame 200 by the recessed part 210 formed on the unit module frame 200. At this time, the protrusion 220 may be formed so as to be connected to the upper part and the lower part of the recessed part 210 so as to be adjacent to the recessed part 210. Further, in relation to the protrusion 220, when the module unit 300 is stacked as described later, the protrusions 220 of the module unit 300 may be stacked so as to come into contact with each other. The protrusions 220 of the module unit 300 are stacked so as to come into contact with each other, so that the space part 250 can be formed as described later.

Further, referring to Fig. 6, lead slots 290 through which the electrode leads 111 and 112 pass may be formed in the front surface part and the rear surface part of the unit module frame 200. Additional electrical connection of the electrode leads 111 and 112 may be possible through the lead slot 290.

The battery module 100 according to an embodiment of the present disclosure may include a module unit 300 having a structure in which at least one battery cell 100 is surrounded by a unit module frame 200. At this time, the battery cell 100 may include a plurality of battery cells 110, but it is preferable to contain a smaller number of battery cells 110 as compared to the conventional battery module.

The conventional battery module includes a plurality of battery cells within a single module frame, which may cause a problem that a single module frame is deformed by the cell swelling phenomenon caused by a plurality of battery cells, or the cell swelling could not absorb. Further, it has been difficult to secure the rigidity of the conventional battery module due to the above deformation or the like. In addition, since a large number of battery cells are included within a single module frame, the temperature deviation between the outermost battery cell and the central battery cell, which are more likely to be cooled externally, appears severely, which causes problems that the life of the battery cell is weakened and the possibility of ignition increases.

Therefore, referring to Figs. 6 to 8, the battery module 100 according to the present embodiment includes stacking the module units 300 by a plurality of numbers. As a plurality of module units 300 are stacked, the recessed part 210 may form a space part 250 between the module units 300.

At this time, in the battery module 100 according to an embodiment of the present disclosure, a plurality of module units 300 including a small number of battery cells 110 as compared to the conventional battery module are stacked to form the battery module 100, and each module unit 300 includes a single module frame 200, thereby capable of securing the module rigidity.

Further, by including a plurality of single module frame 200, even when the cell swelling phenomenon of the battery cell 110 occurs, the cell swelling phenomenon can be absorbed by each single module frame 200, and the deformation of the battery module 100 can be minimized as a whole.

In particular, as a plurality of module units 300 are stacked, the configuration of the space part 250 formed by the recessed part 210 forms an air gap or introduces a cooling water and an external air through the space part, so that the formation of additional cooling paths is possible.

Moreover, the configuration of the single module frame 200 and the recessed part 210 formed on the side surface part of the single module frame 200 functions as a cooling pin by itself, so that heat generated in the battery cell 110 can be cooled. Further, the configuration of the recessed part 210 is formed widely in the longitudinal direction of the battery cell 110 along the side surface part of the single module frame 200, effective cooling of the heat generated in the battery cell 110 is possible. Therefore, a small number of battery cells 110 are included as described above, and the battery cell 110 forms a large number of cooling structures by the single module frame 200, the recessed part 210 and the space part 250, thereby capable of eliminating a temperature difference between the battery cells 110.

Referring to Fig. 7, the battery module 100 according to an embodiment of the present disclosure is configured such that a plurality of stacked module units 300 can be coupled by a coupling member.

More specifically, the coupling member 400 may include a strap 400, and the strap 400 may include surrounding the plurality of stacked module units 300. Further, a plurality of stacked module units 300 can be coupled by an adhesive, and can also be coupled by a bolt structure. Further, the module unit 300 can be coupled by various methods that enable coupling between the plurality of module units 300.

At this time, the module unit 300 of the present disclosure can be stacked by coming into contact with the protrusions 220, or can be stacked by coming into contact with the upper surface and the bottom of the module unit 300 with each other. Therefore, a plurality of module units 300 may be coupled or stacked to form various connection structures.

Next, a battery module according to another embodiment of the present disclosure will be described.

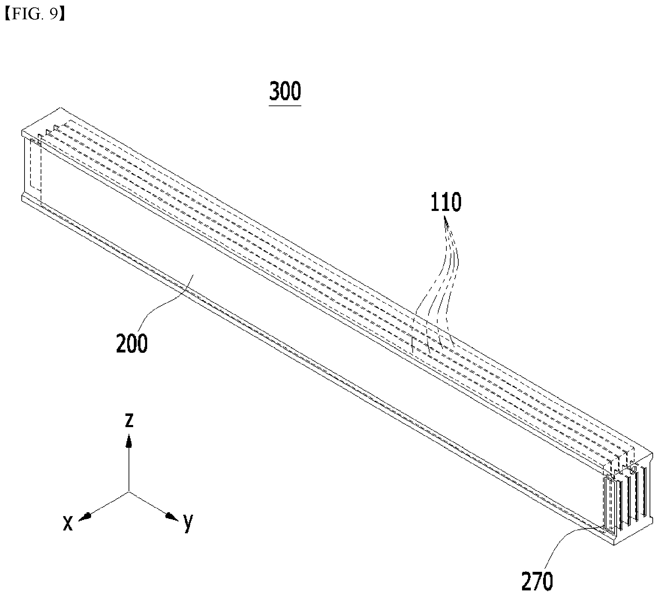

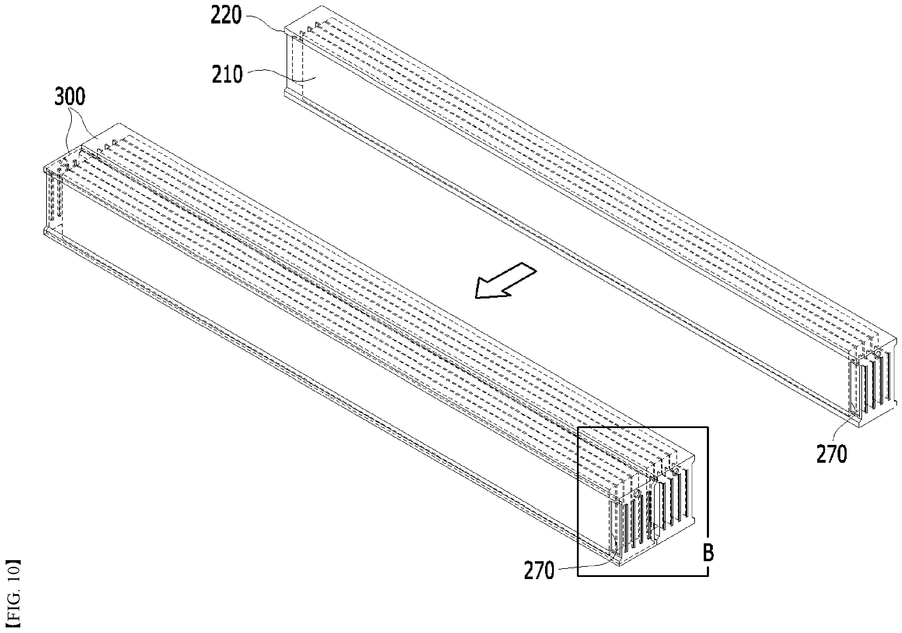

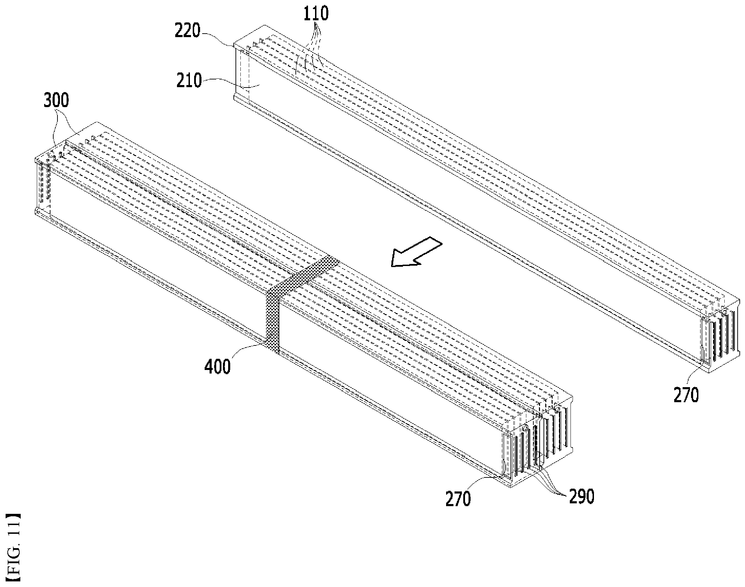

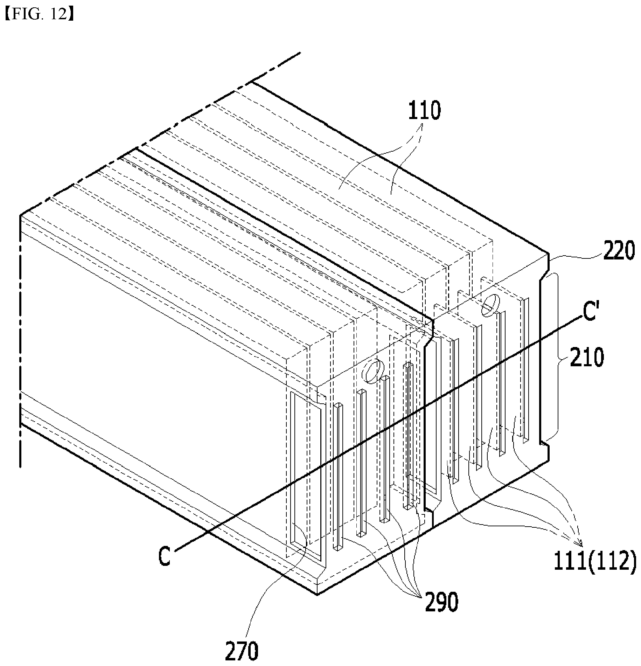

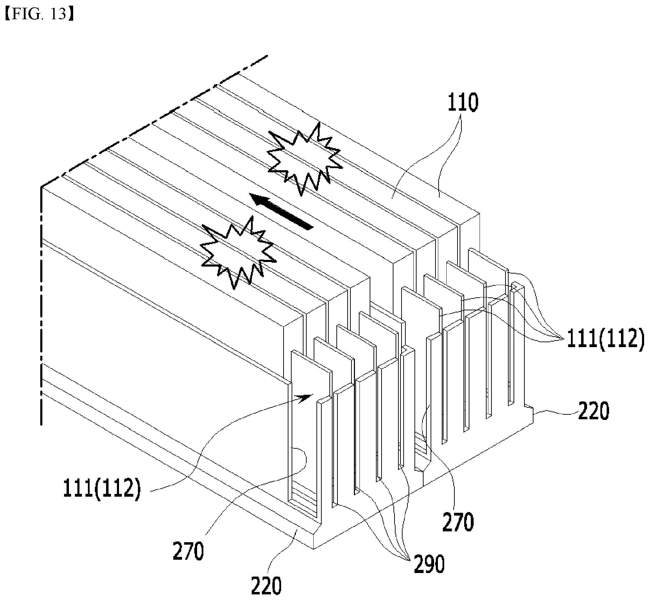

Fig. 9 is a perspective view showing a module unit included in a battery module according to another embodiment of the present disclosure. Fig. 10 is a perspective view showing a battery module according to another embodiment of the present disclosure formed by connecting the module unit of Fig. 9. Fig. 11 is a view showing a coupling member formed in the battery module of Fig. 10. Fig. 12 is a perspective view enlarging and showing a section B of Fig. 10. Fig. 13 is a cross-sectional view showing a cross-section taken along the cutting line C-C' of Fig. 12.

Referring to Figs. 9 and 13, the battery module 100 according to the present embodiment includes at least one battery cell 110, and a module unit 300 containing a unit module frame 200 surrounding the at least one battery cell 110, wherein the side surface part of the unit module frame 200 includes a recessed part 210. Further, the battery module according to the present embodiment includes a gas discharge port 270 formed on the recessed part 210.

The conventional battery module does not have a structure and a path through which flames and gases generated inside the battery module can be discharged and moved, whereby the flame is not properly discharged and there is the risk of ignition and explosion. In particular, when a thermal runaway propagation phenomenon occurs due to the ignition and explosion, there is the risk of a chain reaction between adjacent battery cells and battery modules.

Therefore, referring to Figs. 8 and 10, 12 and 13 according to the previous embodiments, the battery module 100 according to the present embodiment includes stacking a plurality of module units 300 including a recessed part 210 and a gas discharge port 270. As a plurality of module units 300 are stacked, the recessed part 210 can form a space part 250 between the module units 300.

At this time, during the internal ignition of the battery module through the gas discharge port 270 included in the battery module 100 according to the present embodiment, particularly during the internal ignition of the single module frame 200, flames and gases can be discharged quickly. Therefore, it is possible to achieve the effect of rapidly extinguishing an ignition.

Further, as a plurality of module units 300 are stacked, the configuration of the space part 250 formed by the recessed part 210 forms an air gap and thus, can serve as a heat insulating layer. As the recessed part 210 serves as a heat insulating layer, it is possible to achieve the effect of blocking and delaying the chain reaction when the thermal runaway propagation phenomenon occurs.

In addition, since the space part 250 may be formed along the shape of the recessed part 210, the space part 250 included in the battery module 100 according to the present embodiment can be formed along the longitudinal direction of the battery cell 110 so as to be parallel to the side surface part of the battery cell 110.

At this time, the gas discharge port 270 included in the battery module 100 according to the present embodiment may be connected to the space part 250. Therefore, the gas and flame discharged through the gas discharge port 270 are moved along the space part 250, so that the discharge of gases and flames can be effective. Therefore, the configuration of the gas discharge port 270 and the space part 250 connected to the gas discharge port 270 may form a moving path of gas and flame.

Also, referring to Fig. 13, the gas discharge port 270 included in the battery module 100 according to the present embodiment may include being formed on the recessed part 210 so as to be adjacent to the electrode leads 111 and 112 formed in the battery cell 110. At this time, the gas discharge port 270 may be formed in a partial region of the recessed part 210. The electrode leads 111 and 112 of the battery cells 110 are parts where heat is generated, and there is a high possibility of ignition and explosion due to the heat generation. Therefore, when the electrode leads 111 and 112 ignite, gas and a flame can be rapidly discharged through the gas discharge port 270 formed adjacent to the electrode leads 111 and 112. Further, since the gas discharge port 270 is connected to the space part 250 to form a moving path of gas and flame, this path allows rapid movement of gases and flames. By promoting the rapid movement of gases and flames in this way, it is possible to prevent the thermal runaway propagation phenomenon. Further, when the thermal runaway propagation phenomenon occurs, it is possible to prevent and delay a chain reaction that may occur between the battery cell and the module unit.

The gas discharge port 270 according to the present embodiment may be formed on one side surface part and/or both side surface parts of the module unit 300. More specifically, the gas discharge port 270 may be formed in a part or the whole of the recessed part 210 of the module unit 300.

Referring to Fig. 11, the battery module 100 according to an embodiment of the present disclosure may also be coupled to a plurality of stacked module units 300 by a coupling member.

More specifically, the coupling member 400 may include a strap 400, and the strap 400 may include surrounding the plurality of stacked module units 300. In addition, a plurality of stacked module units 300 can be coupled by an adhesive, and can also be coupled by a bolt structure. Further, the module unit 300 may be coupled by various methods that enable coupling between the plurality of module units 300.

At this time, the module unit 300 of the present disclosure can be stacked by coming into contact with the protrusions 220, or can be stacked by coming into contact with the upper surface and the bottom of the module unit 300 with each other. Therefore, a plurality of module units 300 can be coupled or stacked to form various connection structures.

Next, a module unit included in a battery module according to another embodiment of the present disclosure will be described.

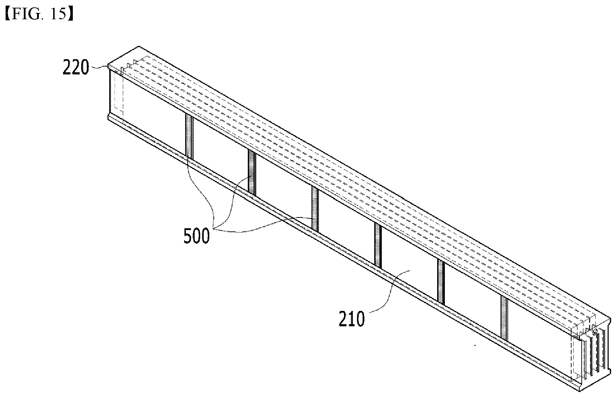

Fig. 15 is a perspective view of a module unit included in a battery module according to another embodiment of the present disclosure.

Since there are contents overlapping with the contents of the battery module described above, only the parts different from the contents of the battery module described above will be described.

Referring to Fig. 15, the module unit 300 included in the battery module according to another embodiment of the present disclosure further includes a reinforcing bead 500 formed on the recessed part 210 of the unit module frame 200, and the plurality of reinforcing beads 500 are spaced apart on the recessed part 210, and are formed of a plurality of beads. At this time, a plurality of reinforcing beads 500 may be formed along the longitudinal direction of the battery cell 110.

Further, each of the reinforcing beads 500 may be formed so as to be perpendicular to the longitudinal direction of the battery cell 110.

In order to more improve the module rigidity as compared to the conventional battery module, a reinforcing bead 500 may be further formed on the recessed part 210 of the unit module frame 200.

Therefore, when a cell swelling phenomenon of the battery cell 110 occurs through the above structure, the effect of absorbing the cell swelling of the unit module frame 200 can be increased. Further, the deformation of the unit module frame 200 due to the cell swelling absorption can be minimized.

Further, the module unit 300 according to the present embodiment includes a gas discharge port 270 formed on the recessed part 210, and promotes rapid movement of gas and flame, so that it is possible to prevent the thermal runaway propagation. When the thermal runaway propagation phenomenon occurs, it is possible to prevent and delay a chain reaction that may occur between the battery cell and the module unit.

Next, the heat dissipation member and the thermal conductive resin layer included in the battery module according to another embodiment of the present disclosure will be described.

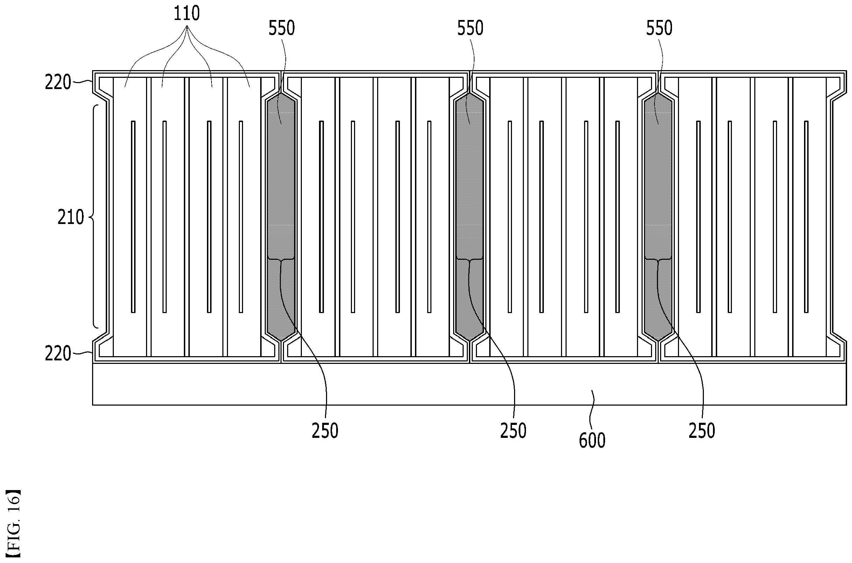

Fig. 16 is a view showing a heat dissipation member and a thermal conductive resin layer included in a battery module according to another embodiment of the present disclosure.

Since there are contents overlapping with the contents of the battery module described above, only the parts different from the contents of the battery module described above will be described.

Referring to Fig. 16, the battery module according to another embodiment of the present invention is configured to stack a plurality of module units 300, and includes a space part 250 formed between the module units 300, and may include a heat dissipation member 550 formed in the space part 250.

At this time, the heat dissipation member 550 formed in the space part 250 may be a heat dissipation pad or a cooling pad, and may be a cooling water and an external air.

The heat dissipation member 550 may be formed so as to have the same size as the space part 250, and it may be formed so as to be smaller than the size of the space part 250 with the range of coming into contact with the space part 250. Heat generated in the battery cell 110 through the contact and transferred to the unit module frame 200 and the module unit 300 can be transferred to the heat dissipation member 550.

Therefore, it is possible to effectively cool the heat generated in the battery cell 110 through the heat dissipation member 550 formed in the space part 250, and it is possible to minimize the possibility of ignition and heat generation of the battery module.

Also, referring back to Fig. 16, the battery module according to another embodiment of the present disclosure may further include a thermal conductive resin layer 600 formed under the bottom of the unit module frame 200.

A thermal conductive resin layer 600 is formed under the bottom of the unit module frame 200, so that heat transferred from the battery cell 110 can be quickly transferred to the outside of the battery module, and thus the battery cell 110 can be cooled.

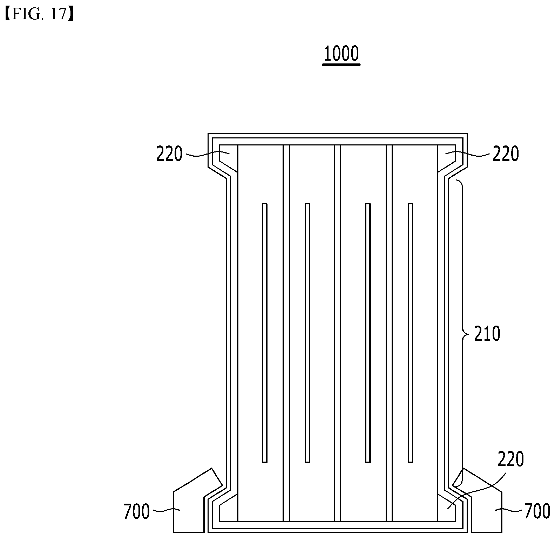

Next, a battery pack according to another embodiment of the present disclosure will be described with reference to Fig. 17.

Fig. 17 is a view showing a battery pack according to another embodiment of the present disclosure.

Referring to Fig. 17, the battery pack 1000 according to another embodiment of the present disclosure includes the battery module 100 described above. In particular, it includes the protrusion 220 formed in the unit module frame 200 of the battery module 100 described above. Further, the battery pack 1000 according to the present embodiment further includes a battery module 100, a protrusion 220 and a fixing member 700 fitted on the protrusion 220 described above, and the unit module frame 200, the module unit 300 and/or the battery module 100 can be fixed by the fixing member 700. In Fig. 17, only the battery module 100 formed of one module unit 300 is shown, but the battery module 100 formed of a plurality of module units 300 may also be included in the battery pack 1000 of the present embodiment. In particular, since the battery module 100 must be stably fixed on the battery pack 1000 to increase stability, the effect of providing a battery pack with improved stability may be achieved through the protrusion 220 and the fixing member 700 included in the battery pack 1000 according to the present embodiment.

In addition, the battery pack according to the present disclosure may have a structure in which one or more of the battery modules according to the present embodiment are gathered, and packed together with a battery management system (BMS) and a cooling device that control and manage battery's temperature, voltage, etc.

The above-mentioned battery pack can be applied to various devices. Such a device may be applied to a vehicle means such as an electric bicycle, an electric vehicle, or a hybrid vehicle, but the present disclosure is not limited thereto, and is applicable to various devices that can use a battery module, which also falls under the scope of the present disclosure.

Although the invention has been shown and described with reference to the preferred embodiments, the scope of the present disclosure is not limited thereto, and numerous other modifications and embodiments can be devised by those skilled in the art, without departing from the spirit and scope of the principles of the invention described in the appended claims. Further, these modified embodiments should not be understood individually from the technical spirit or perspective of the present disclosure.

### [Description of Reference Numerals]

100: battery module
110: battery cell
200: unit module frame
210: recessed part
220: protrusion
250: space part
270: gas discharge port
290: lead slot
300: module unit
400: coupling member
500: reinforcing bead
50: heat dissipation member
600: thermal conductive resin layer
700: fixing member

## Claims

1. A battery module comprising:
at least one battery cell, and a module unit containing a unit module frame surrounding the at least one battery cell,
wherein a side surface part of the unit module frame comprises a recessed part.

2. The battery module according to claim 1,
which further comprises a gas discharge port formed on the recessed part.

3. The battery module according to claim 2, wherein:
the gas discharge port is formed in a partial region of the recessed part.

4. The battery module according to claim 2, wherein:
which further comprises an electrode lead formed in the battery cell,
wherein the gas discharge port is formed on the recessed part so as to be adjacent to the electrode lead.

5. The battery module according to claim 2, wherein:
the recessed part is recessed inside the unit module frame toward a direction in which the battery cell is located.

6. The battery module according to claim 2,
which comprises being formed so that a surface of the unit module frame on which the recessed part is formed and a side surface part of the battery cell are parallel to each other.

7. The battery module according to claim 2, wherein:
the module unit is stacked by a plurality of numbers, and
the recessed part forms a space part between the module units as the plurality of module units are stacked.

8. The battery module according to claim 7, wherein:
the gas discharge port is coupled to the space part.

9. The battery module according to claim 7, wherein:
the unit module frame comprises a protrusion that protrudes as compared to the recessed part, and
the plurality of the module units are stacked so that the protrusions of the plurality of module units come into contact with each other.

10. The battery module according to claim 7, wherein:
the plurality of stacked module units are coupled by a coupling member.

11. The battery module according to claim 10, wherein:
the coupling member comprises a strap, and
the strap surrounds the plurality of stacked module units.

12. The battery module according to claim 7,
which further comprises a reinforcing bead formed on the recessed part,
wherein the reinforcing beads are spaced apart on the recessed part, and are formed of a plurality of beads.

13. The battery module according to claim 7,
which further comprises a heat dissipation member formed on the space part.

14. The battery module according to claim 1,
which further comprises a thermal conductive resin layer formed under the bottom of the unit module frame.

15. A battery pack comprising the battery module as set forth in claim 1.

16. The battery pack according to claim 15, wherein:
which further comprises a protrusion formed in the unit module frame of the battery module, and further comprises a fixing member fitted on the protrusion,
wherein the battery module is fixed by the fixing member.
